# EUROPÄISCHE PATENTSCHRIFT

(11) **EP 0 715 424 B1**
(45) Veröffentlichungstag und Bekanntmachung des Hinweises auf die Patenterteilung: **20.05.1998**
(21) Anmeldenummer: 95118409.2
(22) Anmeldetag: 23.11.1995
(51) Int. Cl.: H04B 17/00

(54) **Verfahren zum Testen einer Funkeinrichtung**
Method for testing a radio system
Procédé de test d'un système radio

(30) Priorität: 30.11.1994 DE 4442531
(43) Veröffentlichungstag der Anmeldung: 05.06.1996
(73) Patentinhaber: Alcatel Mobile Communication Deutschland GmbH, 70499 Stuttgart (DE)
(72) Erfinder: Neustadt, Alf, D-70184 Stuttgart (DE)
(74) Vertreter: Pohl, Herbert, Dipl.-Ing.

(56) Entgegenhaltungen:
- EP-A- 0 599 679
- US-A- 5 337 316
- ELEKTRONIK, 16 FEB. 1990, MÜNCHEN (DE), Bd. 39, Nr. 4, ISSN 0013-5658, Seiten 122-124, PICKEN D 'Digital mobile radio systems: new demands on HF instrumentation'
- REVIEW OF THE ELECTRICAL COMMUNICATION LABORATORIES, MARCH 1982, JAPAN, Bd. 30, Nr. 2, ISSN 0029-067X, Seiten 380-391, KOMAGATA H ET AL 'Automatic measurement for mobile radio unit (land mobile telephone system)'

## Beschreibung

Die Erfindung betrifft ein Verfahren zum Testen einer Funkeinrichtung nach dem Oberbegriff des Anspruch 1 und eine dafür vorgesehene Funkeinrichtung nach dem Oberbegriff des nebengeordneten Anspruchs.

Aus US-A-5 337 316 ist ein Verfahren zum Testen einer Funkeinrichtung bekannt, die nach dem Frequenzduplexverfahren sendet. Die dort beschriebene Funkeinrichtung hat ein Sendeteil, das innerhalb eines Sendebandes auf mindestens einer Sendefrequenz sendet, und ein Empfangsteil, das innerhalb eines Empfangsbandes auf mindestens einer Empfangsfrequenz empfängt. Außerden hat die bekannte Funkvorrichtung eine Generatorschaltung, die zum Testen der Funkeinrichtung zumindest ein Oszillatorsignal erzeugt, das das Sendeteil und das Empfangsteil auf eine gemeinsame Sende- und Empfangsfrequenz einstellt. Dadurch wird erreicht, daß die Funkeinrichtung während des Tests auf ein und demselben Träger sendet und empfängt. Die bekannte Funkvorrichtung hat auch einen Duplexer, der das Sendeteil und das Empfangsteil mit einer Antenne verbindet. Außerdem hat die Funkvorrichtung eine Schalteinheit, die zu Beginn des Tests der Funkvorrichtung den Duplexer von dem Sendeteil trennt, und eine zweite Schalteinheit, die eine HF-Schleife schließt, um das HF-Sendesignal von dem Sendeteil auf den Eingang des Empfangsteils zurückzuführen. Für diese HF-Schleife werden zusätzlich zu den Schalteinheiten noch zwei HF-Koppler benötigt, die beim Test das HF-Sendesignal aus dem Sendpfad auskoppeln und in den Empfangspfad einkoppeln.

Weiterhin ist aus EP 599 679 Al ein Verfahren zum Testen einer Funkvorrichtung bekannt, bei dem zwischen dem Duplexer der Funkvorrichtung und der Sende-und Empfangs-Antenne eine Vorrichtung geschaltet wird. Die Vorrichtung (s. Fig. 2 in EP 599 679 A1) enthält einen HF-Koppler, der einen Teil des HF-Sendesignals vom Sendepfad abzweigt und auf eine Mischstufe führt. Die Mischstufe setzt das HF-Sendesignal von der Sendefrequenz auf die Empfangsfrequenz um. Anschließend koppelt der HF-Koppler das umgesetze HF-Sendesignal in den Empfangspfad ein. Demnach wird dort eine Vorrichtung benötigt, die eine HF-Schleife aufgebaut, indem sie einen Teil des HF-Sendesignals, d.h. des Ausgangssignals des Duplexers, mischt und wieder auf den Duplexer zum Empfang durch das Empfangsteil zurückführt.

Um Funkeinrichtungen, die nach dem Frequenzduplexverfahren senden und empfangen, zu testen, ist weiterhin aus WO 91/19366 bekannt, das HF-Sendesignal über eine Testvorrichtung auf den Eingang des Empfängers zurückzuführen. Die dort beschriebene Testvorrichtung muß das HF-Sendesignal von der Sendefrequenz auf die Empfangsfrequenz umsetzen. Es ist darüberhinaus erforderlich, das HF-Sendesignal zunächst zu demodulieren, das demodulierte Nutzsignal zu verarbeiten und daraus anschließend durch Modulation ein HF-Empfangssignal zu erzeugen. Wie dort beschrieben ist ein solch aufwendiges Verfahren zum Testen einer nach dem GSM-Standard ausgelegten Funkeinrichtung (Funkfeststation oder Mobilstation) erforderlich. Dort wird nach dem TDMA-Verfahren so gesendet und empfangen, daß die TDMA-Rahmen in Abwärtsrichtung (Downlink) und Aufwärtsrichtung (Uplink) zueinander um 3 Zeitschlitze verschoben sind. Diese Zeitverschiebung muß demnach in der Testvorrichtung erfolgen, was das Verfahren zum Testen und die Testvorrichtung selbst aufwendig macht.

Aufgabe der Erfindung ist es ein einfaches Verfahren und einfache Mittel zum Testen einer Funkvorrichtung vorzustellen.

Gelöst wird die Aufgabe durch ein Verfahren nach Anspruch 1 und durch eine mit Mitteln zur Durchführung des Verfahrens ausgestattete Funkvorrichtung nach Anspruch 8.

Gemäß Anspruch 1 wird ein Verfahren vorgeschlagen, bei dem das HF-Sendesignal am Ausgang des Sendeteils auf den Eingang des Empfangsteils geführt wird, indem das HF-Sendesignal sich von selbst über den Duplexer auf den Eingang des Empfangsteils zurückkoppelt, wobei das HF-Sendesignal auf dem Träger zumindest außerhalb eines der Sende- oder Empfangs-Bandbereiche liegt und durch die Filtereigenschaften des Duplexers um eine Dämpfung gedämpft wird, die ein Übersteuern des Empfangsteils verhindert.

Dadurch wird der Duplexer selbst zur Rückführung des HF-Sendesignals ausgenutzt. Außerdem wird durch den Betrieb außerhalb mindestens eines der Sendeempfangs-Bandbereiche erreicht, daß die dort aufgrund der Filterwirkung sich einstellende Dämpfung des Duplexers ausgenutzt wird, um am Eingang des Empfängers eine Übersteuerung zu verhindern, d.h. um eine gewünschte Schleifendämpfung einzustellen. Der Einsatz von zusätzlichen Schaltmitteln, HF-Kopplern oder Testvorrichtungen entfällt.

Gemäß Anspruch 8 wird eine einfach aufgebaute Funkvorrichtung vorgeschlagen, dessen Duplexer das HF-Sendesignal vom Ausgang des Sendeteils zurück auf den Eingang des Empfangsteils führt, wobei das HF-Sendesignal auf dem Träger zumindest außerhalb eines der Sende- oder Empfangs-Bandbereiche liegt, sodaß der Duplexer durch seine Filtereigenschaften das HF-Sendesignal um eine Dämpfung dämpft und somit ein Übersteuern des Empfangsteils verhindert. Damit entfällt der Einsatz einer mit der Funkvorrichtung zu verbindenen Testvorrichtung.

Vorteilhafte Ausgestaltungen der Erfindung sind den Unteransprüchen zu entnehmen.

Im Weiteren werden als Ausführungsformen der Erfindung zwei erfindungsgemäße Verfahren und eine erfindungsgemäße Funkvorrichtung beschrieben. Dazu werden folgende Figuren zur Hilfe genommen:
- Fig. 1a,: die schematisch den Ablauf eines ersten Verfahrens zeigt,
- Fig. 1b,: die schematisch den Ablauf eines zweiten Verfahrens zeigt,
- Fig. 2a und 2b,: die schematisch die Frequenzlagen der in den Verfahren benutzten Sende- und Empfangsfrequenzen darstellen; und
- Fig. 3,: die das Blockschaltbild einer hier als Funkfeststation ausgeführten Funkvorrichtung zeigt.

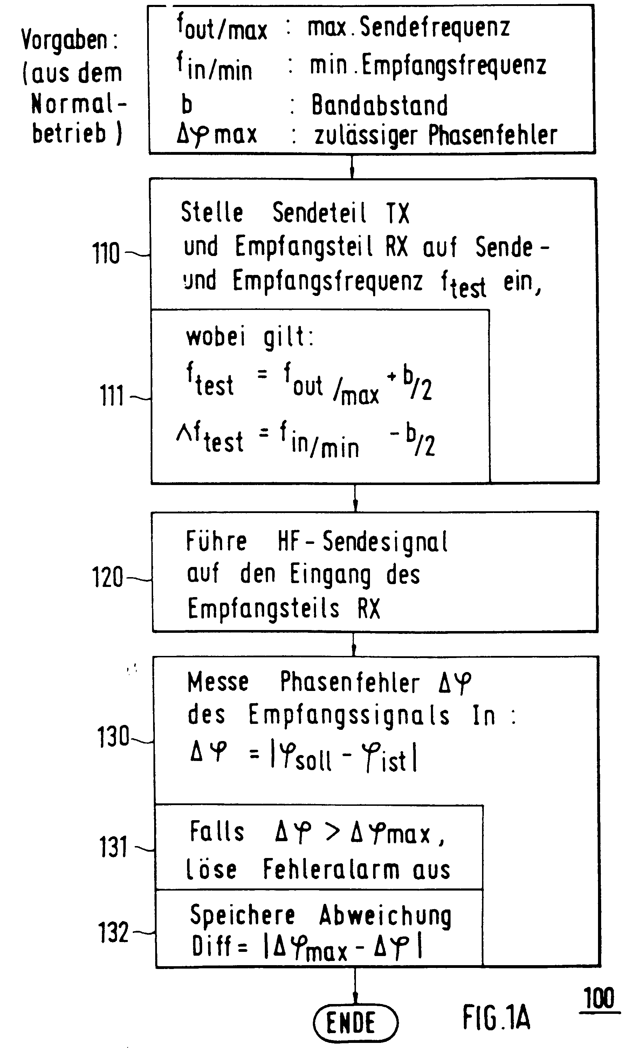

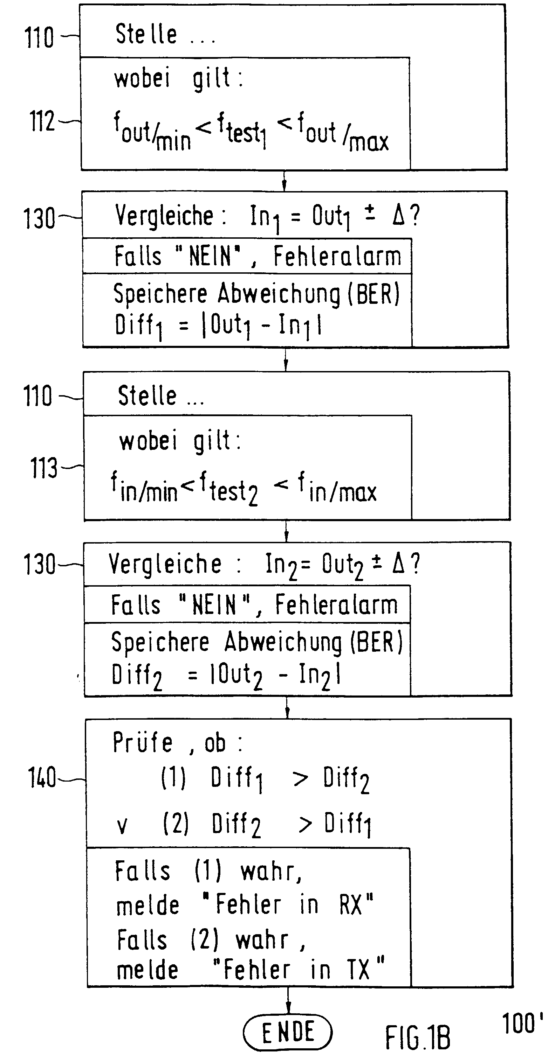

In Fig. 1 ist das Ablaufdiagramm eines ersten Verfahrens 100 zum Testen einer Funkeinrichtung dargestellt. Zur Durchführung des Verfahrens 100 sind hier folgende Parameter vorzugeben:

Die max. Sendefrequenz fₒᵤₜ max und die min. Empfangsfrequenz fᵢₙ min für den Normalbetrieb der Funkeinrichtung, der Bandabstand b (hier 20 MHz = |fₒᵤₜ max - fᵢₙ min|) und der zulässige Phasenfehler Δϕ.

In einem ersten Schritt 110 werden das Sendeteil TX und das Empfangsteil RX der Funkeinrichtung auf eine Sende- und Empfangsfrequenz fₜₑₛₜ eingestellt. Dies erfolgt z.B. durch Verstellen des Synthesizers. In einem Teilschritt 111 wird fₜₑₛₜ so eingestellt, daß fₜₑₛₜ zwischen dem normalen Sendeband DL und dem normalen Empfangsbamd UL in einer Frequenzlage liegt, die dem halben Bandabstand b/2 entspricht (hier: fₜₑₛₜ = 922,5 MHz).

Danach folgt ein Schritt 120, in dem das HF-Sendesignal vom Ausgang des Sendeteils TX auf den Eingang des Empfangsteils RX geführt wird. Dies geschieht von selbst über den Duplexer der Funkeinrichtung.

In einem weiteren Schritt 130 wird der Phasenfehler Δϕ des Empfangssignals In ermittelt. Dazu wird die tatsächliche Phasenlage ϕᵢₛₜ gemessen und mit der gewünschten Phasenlage ϕₛₒₗₗ verglichen. Falls der Phasenfehler Δϕ = ϕₛₒₗₗ - ϕᵢₛₜ größer als der zulässige Phasenfehler Δϕₘₐₓ ist, wird in einem Teilschritt 131 ein Fehleralarm ausgelöst. Der Fehleralarm wird hier am Ort der Funkeinrichtung sehr einfach in Form einer aufleuchtenden Warnlampe angezeigt. Es ist auch denkbar den Fehleralarm an eine Wartungszentrale fernzuübertragen.

In einem weiteren Teilschritt 132 wird die ermittelte Abweichung Diff=|Δϕₘₐₓ - Δϕ| zwischen dem zulässigen Phasenfehler und dem gewesenen Phasenfehler gespeichert. Dies geschieht etwa durch Speicherung entsprechender Testdaten auf einer Diskette.

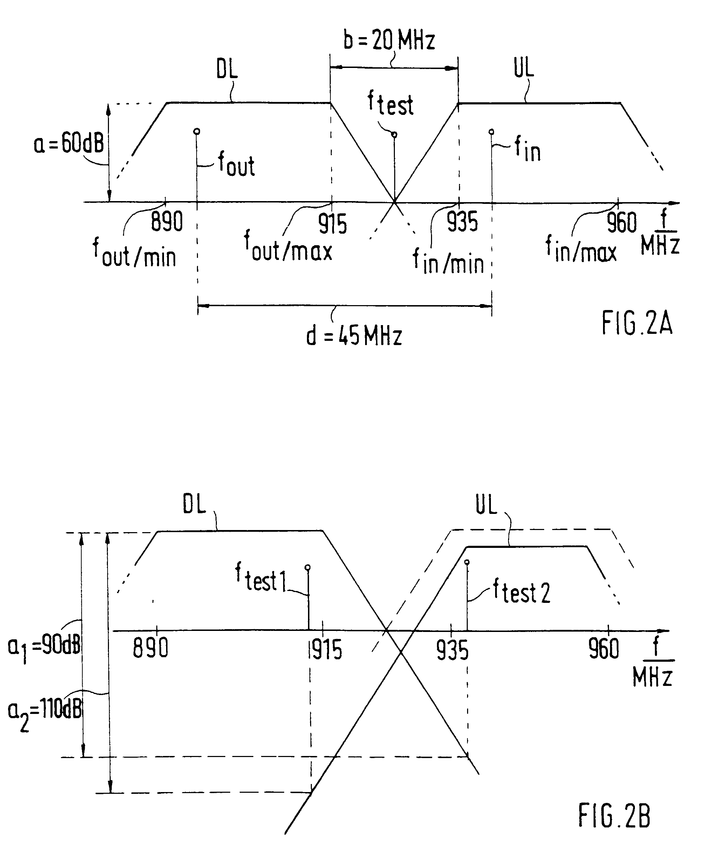

Wie in Fig. 2a dargestellt, bewirkt das nach Fig. 1a beschriebene Verfahren 100, daß beim Testen der Funkeinrichtung das Sendeteil TX als auch das Empfangsteil RX außerhalb des normalen Sendebandes DL bzw. Empfangsbandes UL arbeiten. Dadurch stellt sich bei der Rückkopplung des HF-Sendesignals auf den Eingang des Empfangsteils eine Dämpfung a ein, die hier etwa 40 dB beträgt. Diese Dämpfung wirkt wie eine Schleifendämpfung in einem Regelkreis und verhindert ein Übersteuern des Empfangsteils RX. Diese Dämpfung a wird im wesentlichen durch die Filtereigenschaften des Duplexers bestimmt.

In Fig. 1b ist ein zweites Verfahren 100' schematisch dargestellt, bei dem das Sendeteil und das Empfangsteil zunächst auf eine Sende- und und Empfangsfrequenz fₜₑₛₜ₁ anschließend auf eine andere Sende- und Empfangsfrequenz fₜₑₛₜ₂ eingestellt werden. Diese Sende- und Empfangsfrequenzen sind so gewählt, daß sich anhand dieses zweiten Verfahrens 100' feststellen läßt, ob innerhalb des Sendeteils oder des Empfangsteils ein Fehler auftritt.

Dazu wird zunächst in einem Teilschritt 112 des Schritts 110 die Sende- und Empfangsfrequenz fₜₑₛₜ₁ innerhalb des Sendebandes DL gelegt. Hier umfaßt das Sendeband Frequenzlagen lagen zwischen f_{out/min} = 890 MHz und f_{out/max} = 915 MHz. Dann wird das Empfangssignal mit dem Sendesignal verglichen. Dies geschieht etwa durch Bitvergleich der entsprechenden Basisbandsignale In₁ und Out₁. Dazu wird hier innerhalb der Funkeinrichtung das am Demodulatorausgang liegende Empfangssignal In₁ mit dem am Modulatoreingang liegenden Sendesignal Out₁ verglichen. Dabei wird festgestellt, ob innerhalb einer Zeitspanne (z.B. innerhalb eines TDMA-Rahmens) die Abtastwerte des Empfangssignals In₁ sich von den Abtastwerten des Sendesignals Out₁ um nicht mehr als die zulässige Bitfehlerrate Δ unterscheiden. Die Abweichung Diff₁ des Empfangssignals In₁ von dem Sendesignal Out₁ wird ermittelt und abgespeichert (Schritt 130). Diese Abweichung Diff₁ gibt die Bitfehlerrate (BER) an.

Anschließend wird in einem Teilschritt 113 des Schritts 110 die Sende- und Empfangsfrequenz fₜₑₛₜ₂ innerhalb des Empfangsbandes gelegt. Hier umfaßt das Empfangsband Frequenzlagen zwischen f_{in/min} = 935 MHz und f_{in/max} = 960 MHz. Dann wird nochmals, wie oben beschrieben, die Abweichung Diff₂ des Empfangssignales IN₂ von dem Sendesignal Out₂ ermittelt und abgespeichert (nochmals Schritt 130).

In einem weiteren Schritt 140 wird geprüft, welcher der ermittelten Abweichungen Diff₁ oder Diff₂ die größere von beiden ist. Falls Diff₁ größer als Diff₂ ist, wird ein Fehler im Empfangsteil RX gemeldet. Andernfalls wird ein Fehler im Sendeteil TX gemeldet.

Wie in Fig. 2b dargestellt, bewirkt das nach Fig. 1b beschriebene Verfahren 100', daß im wesentlichen entweder nur das Sendeteil oder nur das Empfangsteil, d.h. nur dasjenige, welches jeweils in seinem normalen Bandbereich arbeitet, ein Einfluß auf das Ergebnis Diff₁ bzw. Diff₂ hat. Somit kann festgestellt werden, daß ein Fehler im Empfangsteil RX auftritt, durch den beispielsweise die Empfängerempfindlichkeit um etwa 20 dB reduziert ist. Dies ergibt sich aus dem Unterschied zwischen den jeweils ermittelten Schleifendämpfungen a₁ = 90 dB und a₂ = 110 dB. Um die Schleifendämpfungen nicht zu groß werden zu lassen, ist es denkbar zwischen Sendeteil TX und Empfangsteil RX einen HF-Verstärker zu schalten oder den Ausgangsverstärker des Sendeteils TX voll auszusteuern.

Das beschriebene Verfahren 100', bei dem die jeweils sich einstellende Schleifendämpfung durch denjenigen Signalpfad (Sende- oder Empfangspfad) bestimmt wird, der außerhalb seines Bandbereiches (out of band) betrieben wird, ist ein einfaches und schnelles Verfahren zur Fehlerlokalisierung.

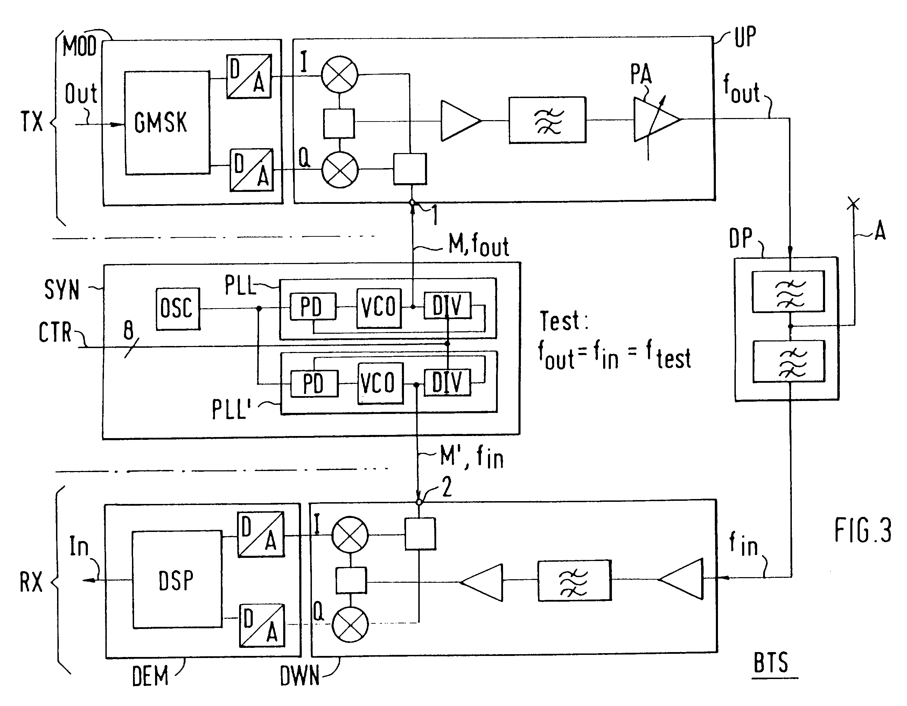

In Fig. 3 ist eine als Funkfeststation BTS ausgeführte Funkeinrichtung schematisch dargestellt. Die Funkfeststation BTS enthält ein Sendeteil TX mit einem Modulator MOD, einem daran angeschlossenen Aufwärtsmischer UP mit einem HF-Leistungsverstärker PA. Dem Sendeteil TX sind ein Duplexer DP und eine Antenne A nachgeschaltet. Der Modulator MOD erzeugt die Quadraturkomponenten I und Q eines Sendesignales Out, das nach Umsetzung in HF-Lage und Verstärkung als ein HF-Sendesignal mit der Sendefrequenz fₒᵤₜ in den Duplexer DP eingespeist und über die Antenne A abgestrahlt wird.

Die Funkfeststation BTS enthält weiterhin ein Empfangsteil RX, das der Antenne A und dem Duplexer DP nachgeschaltet ist. Das Empfangsteil RX enthält einen Abwärtsmischer DWN und einen daran angeschlossenen Demodulator DEM. Ein auf einer Empfangsfrequenz fᵢₙ empfangenes HF-Empfangssignal wird nach Umsetzung in die Basisbandlage als Quadraturkomponenten I und Q des Empfangssignales In auf den Demodulator DEM geführt.

Weiterhin enthält die in Fig. 3 dargestellte Funkfeststation BTS eine als Syntheziser SYN ausgeführte Generatorschaltung zur Erzeugung von Oszillatorsignalen M und M', die über Signaleingänge 1 und 2 dem Aufwärtsmischer UP bzw. dem Abwärtsmischer DWN zugeführt werden. Im Normalbetrieb der Funkfeststation BTS haben diese Oszillatorsignale solche verschiedenen Frequenzen, daß das Sendeteil TX auf der Sendefrequenz fₒᵤₜ sendet und das Empfangsteil RX auf der Empfangsfrequenz fᵢₙ empfängt. Zur Erzeugung der Oszillatorsignale M und M' enthält der Syntheziser SYN zwei Phasenregelkreise PLL und PLL' mit spannungsgesteuerten Oszillatoren VCO, mit Teilerschaltungen DIV und mit Phasendetektoren PD, die mit einem Referenzoszillator OSC verbunden sind.

Der Syntheziser SYN enthält eine als Steuerbus CTR ausgeführte Steuerleitung, über die die Phasenregelkreise gesteuert und somit die Frequenzen der Oszillatorsignale M und M' eingestellt werden. Zum Testen der Funkfeststation BTS werden die Phasenregelkreise nun so gesteuert, daß sowohl am Aufwärtsmischer UP als auch am Abwärtsmischer DWN (s. Signaleingang 1 bzw. 2) eine Mischfrequenz anliegt, die der Sende- und Empfangsfrequenz fₜₑₛₜ entspricht. Dadurch sendet und empfängt die Funkfeststation BTS während des Tests auf ein und denselben Träger ( fₜₑₛₜ = fₒᵤₜ = fᵢₙ). Der Duplexer DP führt das HF-Sendesignal mit der schon genannten Schleifendämpfung auf den Eingang des Empfangsteils zurück. Die gezeigte Funkfeststation BTS ist einfach aufgebaut und ermöglicht ohne Einsatz einer Testvorrichtung die Durchführung des vorgestellten Verfahrens.

Durch Anlegen von Steuersignalen an den Steuerbus CTR kann der Syntheziser SYN auf die Erzeugung aller für den Test- oder Normalbetrieb benötigten Mischfrequenzen schnell eingestellt werden. Ein Vergleich des Empfangssignales In mit dem Sendesignal Out kann etwa durch eine analoge Komparatorschaltung erfolgen oder durch eine digitale Signalauswertung innerhalb der hier nicht dargestellten digitalen Basisbandverarbeitung.

Um die Funkfeststation BTS von Normalbetrieb auf Testbetrieb umzustellen ist es auch denkbar Schaltmittel zu verwenden, die im Testfall die Signaleingänge 1 und 2 nicht mit dem Syntheziser SYN, sondern mit einer anderen die Mischfrequenz erzeugenden Generatorschaltung (z.B. einem sog. local oszillator) zu verbinden.

Die in Fig. 3 gezeigte Funkfeststation BTS wurde beispielhaft für weitere denkbare Ausführungen der erfindungsgemäßen Funkeinrichtung, wie etwa für eine Mobilstation, beschrieben.

Auch die anhand der Fig. 1a bis 2b beschriebenen Verfahren stehen beispielhaft für weitere denkbare Ausführungen des erfindungsgemäßen Verfahrens.

## Patentansprüche

1. Verfahren (100, 100') zum Testen einer Funkeinrichtung (BTS) mit einem Sendeteil (TX), das innerhalb eines Sendebandes (DL) auf mindestens einer Sendefrequenz (fₒᵤₜ) sendet, mit einem Empfangsteil (RX), das innerhalb eines Empfangsbandes (UL) auf mindestens einer Empfangsfrequenz (fᵢₙ) empfängt, und mit einem Duplexer (DP), der das Sendeteil (TX) und das Empfangsteil (RX) mit einer Antenne (A) verbindet, bei dem das Verfahren (100, 100') folgende Schritte enthält:
(110): das Sendeteil (TX) und das Empfangsteil (RX) der Funkeinrichtung werden auf eine Sende- und Empfangsfrequenz (fₜₑₛₜ) eingestellt, wodurch die Funkeinrichtung (BTS) während des Tests auf ein und demselben Träger sendet und empfängt;
**dadurch gekennzeichnet, daß**
(120): das HF-Sendesignal am Ausgang des Sendeteils (TX) auf den Eingang des Empfangsteils (RX) geführt wird, indem das HF-Sendesignal sich von selbst über den Duplexer (DP) auf den Eingang des Empfangsteils zurückkoppelt, wobei das HF-Sendesignal auf dem Träger zumindest außerhalb eines der Sende- oder Empfangs Bandbereiche liegt und durch die Filtereigenschaften des Duplexers (DP) um eine Dämpfung (a) gedämpft wird, die ein Übersteuern des Empfangsteils (RX) verhindert.

2. Verfahren (100, 100') nach Anspruch 1,
dadurch gekennzeichnet, daß in einem weiteren Schritt (130) das Empfangssignal (In) so ausgewertet wird, daß ein Signal-Rauschabstand oder eine Bitfehlerrate ermittelt werden kann.

3. Verfahren (100) nach Anspruch 1,
dadurch gekennzeichnet, daß im Schritt (130) zur Ermittlung der Bitfehlerrate das Empfangssignal (In) mit dem Sendesignal (Out) im Basisband verglichen wird.

4. Verfahren (100') nach Anspruch 1,
dadurch gekennzeichnet, daß im Schritt (130) zur Ermittlung des Signal-Rauschabstandes der Frequenz- oder Phasenfehler (Δϕ) des Empfangssignales (In) gemessen wird.

5. Verfahren (100) nach Anspruch 1,
dadurch gekennzeichnet, daß im Schritt (110) das Sendeteil (TX) und das Empfangsteil (RX) so eingestellt werden (111), daß die Sende- und Empfangsfrequenz (fₜₑₛₜ) zwischen dem Sendeband (DL) und dem Empfangsband (UL), insbesondere auf der Mitte des Bandabstandes (b), liegt.

6. Verfahren (100') nach Anspruch 1,
dadurch gekennzeichnet, daß im Schritt (110) das Sendeteil (TX) und das Empfangsteil (RX) so eingestellt werden, daß die Sende- und Empfangsfrequenz (fₜₑₛₜ):
(112): im Sendeband (DL) oder
(113): im Empfangsband (UL) liegt.

7. Verfahren (100') nach Anspruch 6,
dadurch gekennzeichnet, daß nach den Schritten (112) und (113) jeweils der Schritt (130) durchgeführt wird, und daß danach in einem Schritt (140) die beiden Ergebnisse aus (130) miteinander verglichen werden, um zu prüfen, ob Defekte im Sendeteil (TX) oder im Empfangsteil (RX) auftreten.

8. Funkeinrichtung (BTS) mit einem Sendeteil (TX), das innerhalb eines Sendebandes (DL) auf mindestens einer Sendefrequenz (fₒᵤₜ) sendet, mit einem Empfangsteil (RX), das innerhalb eines Empfangsbandes (UL) auf mindestens einer Empfangsfrequenz (fᵢₙ) empfängt, mit einer Generatorschaltung (SYN), die zum Testen der Funkeinrichtung (BTS) zumindest ein Oszillatorsignal (M, M') erzeugt, das das Sendeteil (TX) und das Empfangsteil (RX) auf eine Sende- und Empfangsfrequenz (fₜₑₛₜ) einstellt, wodurch die Funkeinrichtung (BTS) während des Tests auf ein und demselben Träger sendet und empfängt, und mit einem Duplexer (DP), der das Sendeteil (TX) und das Empfangsteil (RX) mit einer Antenne (A) verbindet,
**dadurch gekennzeichnet, daß**
der Duplexer (DP) das HF-Sendesignal vom Ausgang des Sendeteils (TX) zurück auf den Eingang des Empfangsteils (RX) führt, daß das HF-Sendesignal auf dem Träger zumindest außerhalb eines der Sende- oder Empfangs-Bandbereiche liegt, und daß der Duplexer (DP) durch seine Filtereigenschaften das HF-Sendesignal um eine Dämpfung (a) dämpft und somit ein Übersteuern des Empfangsteils (RX) verhindert.

9. Funkeinrichtung (BTS) nach Anspruch 8,
dadurch gekennzeichnet, daß die Generatorschaltung ein Synthesizer (SYN) ist, der einen ersten Phasenregelkreis (PLL) enthält zum Erzeugen des Oszillatorsignals (M) für das Sendeteil (TX), der einen zweiten Phasenregelkreis (PLL') enthält zum Erzeugen des Oszillatorsignals (M') für das Empfangsteil (RX) und der eine an die Phasenregelkreise (PLL, PLL') angeschlossene Steuerleitung (CTR) enthält zum Einstellen der Frequenzen (fₒᵤₜ, fᵢₙ) der Oszillatorsignale (M, M').

10. Funkeinrichtung nach Anspruch 8,
dadurch gekennzeichnet, daß die Generatorschaltung ein Frequenzoszillator ist, der während dem Testen über Schaltmittel mit den Mischstufen des Sendeteils und des Empfangsteils verbunden ist.

## Claims

1. A process (100, 100') for testing a radio facility (BTS) having a transmit section (TX), that transmits on at least one transmit frequency (fₒᵤₜ) within a transmitting band (DL), and having a receive section (RX), that receives on at least one receive frequency (fᵢₙ) within a receiving band (UL), and having a duplexer (DP), which connects the transmit section (TX) and the receive section (RX) to an antenna (A), whereby the process (100, 100') includes the following steps:
(110): the transmit section (TX) and the receive section (RX) of the radio facility are set to a transmit and receive frequency (fₜₑₛₜ), whereby the radio facility (BTS) transmits and receives on the same carrier during the tests;
**characterised in that**
(120): the transmitted RF signal at the output of the transmit section (TX) is fed to the input of the receive section (RX) by feeding back the transmitted RF signal to the input of the receive section via the duplexer (DP), the transmitted RF on the carrier signal lying at least outside one of the transmitting or receiving band ranges and being attenuated by the filter characteristics of the duplexer (DP) by an attenuation (a), which prevents overdriving of the receive section (RX).

2. Process (100, 100') according to Claim 1, **characterised in that** in a further step (130) the received signal (In) is evaluated so that a signal-to-noise ratio or a bit error rate can be determined.

3. Process (100) according to Claim 1, **characterised in that** in step (130), the received signal (In) is compared in the baseband with the transmitted signal (Out) to determine the bit error rate.

4. Process (100') according to Claim 1, **characterised in that** in step (130), the frequency or phase error (Δϕ) of the received signal (In) is measured to determine the signal-to-noise ratio.

5. Process (100) according to Claim 1, **characterised in that** in step (110), the transmit section (TX) and the receive section (RX) are adjusted (111) so that the transmit and receive frequency (fₜₑₛₜ) lies between the transmitting band (DL) and the receiving band (UL), particularly at the centre of the band spacing (b).

6. Process (100') according to Claim 1, **characterised in that** in step (110), the transmit section (TX) and the receive section (RX) are adjusted so that the transmit and receive frequency (fₜₑₛₜ) lies:
(112): in the transmitting band (DL) or
(113): in the receiving band (UL).

7. Process (100') according to Claim 6, **characterised in that** step (130) is performed both after step (112) and after step (113), and that thereafter, in step (140), the two results from (130) are compared in order to check whether faults occur in the transmit section (TX) or the receive section (RX).

8. Radio facility (BTS) having a transmit section (TX), that transmits on at least one transmit frequency (fₒᵤₜ) within a transmitting band (DL), and having a receive section (RX), that receives on at least one receive frequency (fᵢₙ) within a receiving band (UL), and having a generator circuit (SYN) which, to test the radio facility (BTS), generates at least one oscillator signal (M, M'), which adjusts the transmit section (TX) and the receive section (RX) to a transmit and receive frequency (fₜₑₛₜ), whereby the radio facility (BTS) transmits and receives on the same carrier during the tests, and having a duplexer (DP), which connects the transmit section (TX) and the receive section (RX) to an antenna (A), **characterised in that** the duplexer (DP) feeds back the transmitted RF signal from the output of the transmit section (TX) to the input of the receive section (RX), that the transmitted RF signal on the carrier lies at least outside one of the transmitting or receiving band ranges and that due to its filter characteristics, the duplexer (DP) attenuates the transmitted RF signal by an attenuation (a), and thus prevents overdriving of the receive section (RX).

9. Radio facility (BTS) according to Claim 8, **characterised in that** the generator circuit is a synthesizer (SYN), which contains a first phase-locked loop (PLL) for generating the oscillator signal (M) for the transmit section (TX), and which contains a second phase-locked loop (PLL') for generating the oscillator signal (M') for the receive section (RX), and which contains a control line (CTR) connected to the phase-locked loops (PLL, PLL') for setting the frequencies (fₒᵤₜ, fᵢₙ) of the oscillator signals (M, M') .

10. Radio facility according to Claim 8, **characterised in that** the generator circuit is a local oscillator which, during testing, is connected via switching means to the mixer stages of the transmit section and the receive section.

## Revendications

1. Procédé (100, 100') destiné à tester un dispositif radio (BTS) comprenant un poste émetteur (TX), qui émet à l'intérieur d'un canal d'émission (DL) sur au moins une fréquence d'émission (fout), un poste récepteur (RX), qui capte à l'intérieur d'un canal de réception (UL) sur au moins une fréquence de réception (fᵢₙ), et un duplexeur (DP), qui relie le poste émetteur (TX) et le poste récepteur (RX) avec une antenne (A), lequel procédé (100, 100') fonctionne selon les étapes suivantes :
(110): le poste émetteur (TX) et le poste récepteur (RX) du dispositif radio sont réglés sur une fréquence d'émission et de réception (fₜₑₛₜ) et de ce fait le dispositif radio (BTS) émet et capte pendant le test sur une seule et même onde porteuse ;
caractérisé en ce que
(120) : le signal d'émission à haute fréquence émis à la sortie du poste émetteur (TX) est transmis vers l'entrée du poste récepteur (RX), le signal d'émission à haute fréquence se couple en retour par lui-même, par l'intermédiaire du duplexeur (DP), vers l'entrée du poste récepteur, le signal d'émission à haute fréquence sur l'onde porteuse étant situé au moins à l'extérieur d'une des zones du canal d'émission ou de réception et étant atténué par les propriétés de filtrage du duplexeur (DP) de l'ordre d'une atténuation (a), qui évite une surmodulation du poste récepteur (RX).

2. Procédé (100, 100') selon 1a revendicaticn 1, caractérisé en ce que, au cours d'une autre étape (130), le signal de réception (In) est évalué de telle sorte qu'il est possible de déterminer un rapport signal à bruit ou un taux d'erreurs sur les bits.

3. Procédé (100) selon la revendication 1, caractérisé en ce que, au cours de l'étape (130) destinée à déterminer le taux d'erreurs sur les bits, le signal de réception (In) est comparé au signal d'émission (Out) dans le canal de base.

4. Procédé (100') selon la revendication 1, caractérisé en ce que, au cours de l'étape (130) destinée à déterminer le rapport signal à bruit, on mesure l'erreur de fréquence ou l'erreur de phase (Δϕ) du signal de réception (In).

5. Procédé (100) selon la revendication 1, caractérisé en ce que, au cours de l'étape (110), le poste émetteur (TX) et le poste récepteur (RX) sont réglés (111) de telle sorte que la fréquence d'émission et de réception (fₜₑₛₜ) se situe entre le canal d'émission (DL) et le canal de réception (UL), en particulier au milieu de la distance (b) entre les canaux.

6. Procédé (100') selon la revendication 1, caractérisé en ce que, au ccurs de l'étape (110), le poste émetteur (TX) et le poste récepteur (RX) sont réglés de telle sorte que la fréquence d'émission et de récepticn (fₜₑₛₜ) se situe :
(112) : dans le canal d'émission (DL) ou
(113) : dans le canal de réception (UL).

7. Procédé (100') selon la revendication 6, caractérisé en ce que l'étape (130) est toujours exécutée après les étapes (112) et (113), et en ce que, ensuite, au cours de l'étape (140), les deux résultats obtenus pendant l'étape (130) sont comparés l'un à l'autre afin de vérifier si des défauts apparaissent dans le poste émetteur (TX) ou dans le poste récepteur (RX).

8. Dispositif radio (BTS) comprenant un poste émetteur (TX), qui émet à l'intérieur d'un canal d'émissicn (DL) sur au moins une fréquence d'émission (fₒᵤₜ), et un poste récepteur (RX), qui capte à l'intérieur d'un canal de réception (UL) sur au moins une fréquence de réception (fᵢₙ), et un circuit de générateur (SYN), qui produit au moins un signal de l'oscillateur (M, M') destiné à tester le dispositif radio (BTS), lequel signal règle le poste émetteur (TX) et le poste récepteur (RX) sur une fréquence d'émission et de réception (fₜₑₛₜ), et de ce fait le dispositif radio (BTS) émet et capte pendant le test sur une seule et même onde porteuse, et comprenant le duplexeur (DP), qui relie le poste émetteur (TX) et le poste récepteur (RX) avec une antenne (A), caractérisé en ce que
le duplexeur (DP) retransmet le signal d'émission à haute fréquence émis à la sortie du poste émetteur (TX) vers l'entrée du poste récepteur (RX), en ce que le signal d'émission à haute fréquence sur l'onde porteuse est situé au moins à l'extérieur d'une des zones du canal d'émission ou de réception, et en ce que le duplexeur (DP), par ses propriétés de filtrage, atténue le signal d'émission à haute fréquence de l'ordre d'une atténuation (a) et évite ainsi une surmodulation du poste récepteur (RX).

9. Dispositif radio (BTS) selon la revendication 8, caractérisé en ce que le circuit de générateur est un synthétiseur (SYN), qui contient un premier circuit de régulation des phases (PLL) destiné à produire le signal de l'oscillateur (M) pour le poste émetteur (TX), un deuxième circuit de régulation des phases (PLL') destiné à produire le signal de l'oscillateur (M') pour le poste récepteur (RX) et qui contient une ligne pilote (CTR) connectée aux circuits de régulation des phases (PLL, PLL') pour régler les fréquences (fₒᵤₜ, fᵢₙ) des signaux de l'oscillateur (M, M').

10. Dispositif radio selon la revendication 8, caractérisé en ce que le circuit de générateur est un oscillateur de fréquence qui, pendant le test, est relié, par l'intermédiaire de moyens de connexion, avec les étages de changement de fréquence du poste émetteur et du poste récepteur.
